# EUROPÄISCHE PATENTSCHRIFT

(11) **EP 3 941 785 B1**
(45) Veröffentlichungstag und Bekanntmachung des Hinweises auf die Patenterteilung: **06.09.2023**
(21) Anmeldenummer: 20713236.6
(22) Anmeldetag: 18.03.2020
(51) Int. Cl.: B60N 2/07

(54) **ENDKAPPE FÜR EINE SCHIENE SOWIE LÄNGSEINSTELLER**
END CAP FOR A RAIL AND LENGTH ADJUSTER
BOUCHON D'EXTREMITE POUR UN RAIL ET AJUSTEUR LONGITUDINAL

(30) Priorität: 20.03.2019 DE 102019107089; 29.07.2019 DE 102019120364
(43) Veröffentlichungstag der Anmeldung: 26.01.2022
(73) Patentinhaber: Adient US LLC, Plymouth, MI 48170 (US)
(72) Erfinder: QUAST, Ingo, 40477 Duesseldorf (DE); SPRENGER, Erik, 42929 Wermelskirchen (DE); TURAN, Turgay, 50171 Kerpen (DE)
(74) Vertreter: Liedtke & Partner Patentanwälte
(86) Internationale Anmeldenummer: PCT/EP2020/057403
(87) Internationale Veröffentlichungsnummer: WO 2020/187970

(56) Entgegenhaltungen:
- DE-B4-102013 205 497
- US-A1- 2015 090 854

## Beschreibung

Die Erfindung betrifft eine Endkappe für eine Schiene, insbesondere eines Längseinstellers, mit den Merkmalen des Oberbegriffs des Anspruchs 1 sowie einen Längseinsteller, insbesondere für einen Fahrzeugsitz.

### Stand der Technik

Aus der DE 10 2013 205 497 B4 ist eine Sitzschienen-Endkappe bekannt, die an einem Ende einer unteren Schiene einer zwischen einem Fahrzeugsitz und einem Boden eines Fahrzeugs montierten Sitzschienen-Anordnung installiert ist.

Aus der DE 10 2018 122 094 A1 ist ein gattungsgemäßer Längseinsteller, insbesondere für einen Fahrzeugsitz, bekannt, aufweisend mindestens ein Sitzschienenpaar, welches aus einer unteren Sitzschiene und einer relativ zur unteren Sitzschiene in Längsrichtung verschiebbar geführten oberen Sitzschiene gebildet ist, wobei die untere Sitzschiene und die obere Sitzschiene Öffnungen zur Befestigung einer jeweiligen Endkappe zur Abdeckung jeweils eines Endes der jeweiligen Sitzschiene aufweist und eine stirnseitig auf das Ende der jeweiligen Sitzschiene aufgesteckte Abdeckkappe in die Öffnung eingerastet ist.

Ein weiterer Längseinsteller ist aus der US 2015/090854 A1 mit einer Schienenendkappe bekannt.

### Aufgabe

Der Erfindung liegt die Aufgabe zu Grunde, eine Endkappe für eine Schiene zu verbessern, insbesondere einen Toleranzausgleich zu erhöhen, sowie einen Längseinsteller bereitzustellen.

### Lösung

Diese Aufgabe wird erfindungsgemäß gelöst durch eine Endkappe für eine Schiene, insbesondere eines Längseinstellers, wobei die Endkappe einen Abdeckabschnitt, zum Abdecken eines stirnseitigen Endes der Schiene, und einen Befestigungsabschnitt, zur Befestigung der Endkappe an der Schiene, aufweist, wobei der Befestigungsabschnitt unter Bildung eines Viergelenk-Koppelgetriebes mit dem Abdeckabschnitt verbunden ist.

Dadurch, dass der Befestigungsabschnitt unter Bildung eines Viergelenk-Koppelgetriebes mit dem Abdeckabschnitt verbunden ist, ist ein Ausgleich einer möglicherweise fertigungsbedingten Toleranz im Abstand der Öffnung zu einer Abschlusskante der Schiene ermöglicht.

Unter einem Gelenk, insbesondere in Verbindung mit dem Viergelenk- Koppelgetriebe oder nachfolgend beschriebenen Gelenkpunkten, im Sinne dieser Anmeldung kann allgemein eine gelenkige Verbindung, wie beispielsweise ein Filmscharnier oder ein Filmgelenk, verstanden werden.

Vorteilhafte Ausgestaltungen, welche einzeln oder in Kombination miteinander eingesetzt werden können, sind nachfolgend beschrieben.

Das Viergelenk-Koppelgetriebe kann mittels eines Gestells, einer ersten Schwinge, einer zweiten Schwinge und eines an die beiden Schwingen gekoppelten Befestigungsabschnitts definiert sein. Das Gestell kann durch den Abdeckabschnitt, insbesondere durch einen ersten Gelenkpunkt und einen zweiten Gelenkpunkt, definiert sein. Ein oberer Anbindungspunkt des Befestigungsabschnitts an die erste Schwinge kann einen dritten Gelenkpunkt definieren. Ein unterer Anbindungspunkt des Befestigungsabschnitts an die zweite Schwinge kann einen vierten Gelenkpunkt definieren. Der Befestigungsabschnitt kann mittels der ersten Schwinge und der zweiten Schwinge mit dem Abdeckabschnitt verbunden sein.

Die Endkappe kann wenigstens abschnittsweise elastisch verformbar sein. Ein Befestigungspunkt kann Teil des Befestigungsabschnitts der Endkappe sein. Im Bereich des Befestigungspunkts kann ein Vorsprung seitlich, insbesondere parallel zu einer Querrichtung, abstehen, welcher mit einem Randbereich einer Öffnung der ersten Schiene in Kontakt bringbar ist. Der Vorsprung kann in Richtung des Abdeckabschnitts der Endkappe eine gekrümmte Kontur aufweisen.

Die Aufgabe wird ferner erfindungsgemäß gelöst durch einen Längseinsteller, insbesondere für einen Fahrzeugsitz, aufweisend mindestens ein Schienenpaar, welches aus einer ersten Schiene und einer relativ zur ersten Schiene in Längsrichtung verschiebbar geführten zweiten Schiene gebildet ist, wobei wenigstens die erste Schiene oder die zweite Schiene wenigstens eine Öffnung zur Befestigung einer Endkappe für ein Ende der jeweiligen Schiene aufweist, wobei der Längseinsteller eine in der Öffnung befestigte Endkappe gemäß der vorstehenden Beschreibung aufweist.

Der Randbereich der Öffnung kann eine gebogene Kontur aufweisen.

### Figuren und Ausführungsformen der Erfindung

Bevor nachfolgend Ausgestaltungen der Erfindung eingehender an Hand von Figuren beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Figur 1: eine schematische Darstellung eines Fahrzeugsitzes mit einem erfindungsgemäßen Längseinsteller,
- Figur 2: eine schematische Darstellung eines Schienenpaares des Längseinstellers,
- Figur 3: eine perspektivische Darstellung einer ersten Schiene des Schienenpaares von Fig. 2,
- Figur 4: eine perspektivische Darstellung eines ersten Endes der ersten Schiene mit einer Endkappe gemäß eines ersten Ausführungsbeispiels,
- Figur 5: ausschnittsweise eine perspektivische Darstellung der Endkappe von Fig. 4,
- Figur 6: ausschnittsweise eine perspektivische Darstellung der ersten Schiene mit der Endkappe von Fig. 4,
- Figur 7: ausschnittsweise eine perspektivische Darstellung eines ersten Endes der ersten Schiene mit einer Endkappe gemäß eines zweiten Ausführungsbeispiels,
- Figur 8: ausschnittsweise eine perspektivische Darstellung der ersten Schiene mit der Endkappe von Fig. 7, und
- Figur 9: eine perspektivische Darstellung des Endes der ersten Schiene mit der Endkappe von Fig. 7.

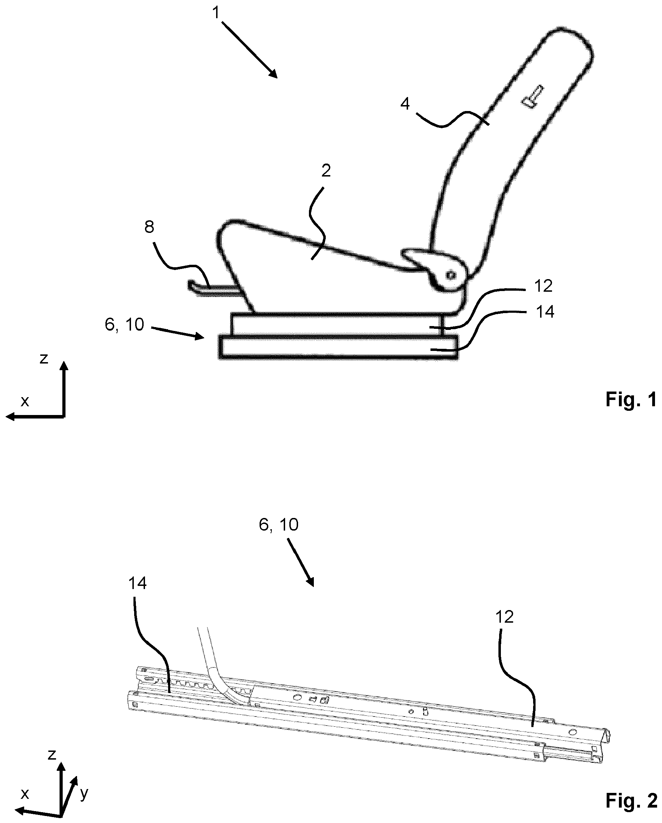

Ein in Fig. 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines in einem Sitzteil 2 des Fahrzeugsitzes 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 4 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Der in Fig. 1 gezeigte Fahrzeugsitz 1 für ein Kraftfahrzeug weist das Sitzteil 2 und die relativ zum Sitzteil 2 in ihrer Neigung einstellbare Lehne 4 auf. Eine Neigung der Lehne 4 kann beispielsweise mittels eines Rastbeschlages oder eines Getriebebeschlages einstellbar sein. Der Fahrzeugsitz 1 ist zur Einstellung einer Sitzlängsposition auf einem Längseinsteller 6 montiert.

Fig. 2 zeigt eine schematische Darstellung eines Schienenpaares 10 des Längseinstellers 6. Das Schienenpaar 10 ist aus einer ersten Schiene 12, vorliegend eine mit dem Fahrzeugsitz 1 verbundene erste Schiene 12, welche auch als Oberschiene bezeichnet werden kann, und einer zweiten Schiene 14, vorliegend eine mit einer Fahrzeugstruktur verbindbare zweite Schiene 14, welche auch als Unterschiene bezeichnet werden kann, gebildet. In einem zwischen der ersten Schiene 12 und der zweiten Schiene 14 gebildeten Hohlraum kann einen Verriegelungseinrichtung angeordnet sein. Die Verriegelungseinrichtung ist mittels eines Betätigungshebels 8 betätigbar. Grundlegend sind ein Aufbau und eine Funktion von Vorrichtungen zum Betätigen der Verriegelungseinrichtung, insbesondere zum Bewegen einer Verriegelungsplatte der Verriegelungseinrichtung in eine Entriegelungsstellung oder eine Verriegelungsstellung, bekannt. Insofern sei beispielhaft auf die DE 10 2010 049 542 A1 sowie die DE 10 2014 219 868 A1 verwiesen, deren diesbezüglicher Offenbarungsgehalt ausdrücklich mit einbezogen wird.

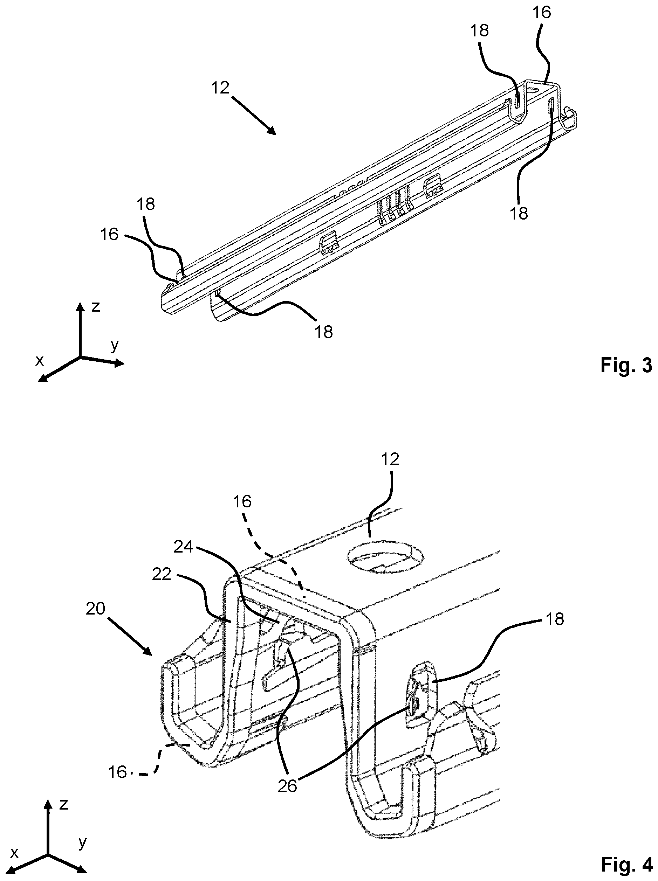

In Fig. 3 ist die erste Schiene 12 des Schienenpaares 10 gezeigt. Die erste Schiene 12 weist im Bereich ihrer beiden in Längsrichtung x gegenüberliegenden stirnseitigen Enden 16 in den im Wesentlichen vertikal verlaufenden Flanken jeweils eine Öffnung 18 auf. Wie beispielsweise in Fig. 4 gezeigt, sind die Öffnungen 18 dazu eingerichtet, dass ein Vorsprung 26 einer Endkappe 20 in jeweils eine Öffnung 18 eingreift, um die Endkappe 20 an der ersten Schiene 12 zu sichern. Die Endkappe 20 verblendet die Stirnseite eines Endbereichs der ersten Schiene 12. Eine entsprechende Endkappe 20 kann ebenso an einer Stirnseite eines Endbereichs der zweiten Schiene 14 angeordnet sein. Die zur Befestigung der Endkappe 20 vorgesehenen Öffnungen 18 sind bevorzugt paarweise und symmetrisch zu einer Ebene senkrecht zur Querrichtung y in der jeweiligen Schiene 12, 14 vorgesehen. Bevorzugt sind die zur Befestigung der Endkappe 20 vorgesehenen Vorsprünge 26 gleichfalls paarweise und symmetrisch zu einer Ebene senkrecht zur Querrichtung y an der Endkappe 20 vorgesehen.

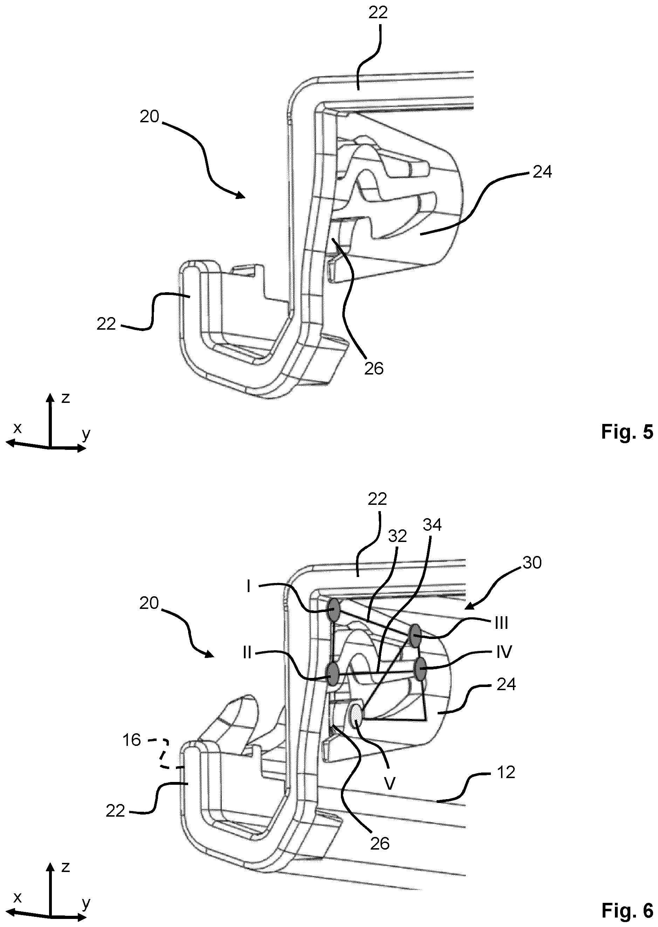

Fig. 4 zeigt eine Endkappe 20 gemäß eines ersten Ausführungsbeispiels an einem Ende 16 einer ersten Schiene 12 und Fig. 5 zeigt ausschnittsweise die Endkappe 20 von Fig. 4 ohne die erste Schiene 12. Die Endkappe 20 ist bevorzugt aus Kunststoff gefertigt. Die Endkappe 20 ist bevorzugt wenigstens abschnittsweise elastisch verformbar. Die Endkappe 20 hat eine ästhetische Funktion und schützt zudem vor Verletzungen.

Fig. 6 veranschaulicht eine schematische Wirkweise eines Viergelenk-Koppelgetriebes 30 im Falle der Endkappe 20 von Fig. 4 gemäß des ersten Ausführungsbeispiels.

Ein Befestigungspunkt V ist Teil des Befestigungsabschnitts 24. Im Bereich des Befestigungspunkts V steht ein Vorsprung 26 seitlich, insbesondere parallel zur Querrichtung y, ab, welcher mit einem Randbereich der Öffnung 18 der ersten Schiene 12 in Kontakt bringbar ist.

Der Befestigungspunkt V folgt einer Koppelkurve, welche für derartige Viergelenk-Koppelgetriebe üblich ist. Diese Koppelkurve kann den Anforderungen entsprechend definierbar sein, durch eine jeweils angepasste Länge der ersten Schwinge 32 und der zweiten Schwinge 34 sowie eines Abstandes zwischen dem jeweiligen ersten Gelenkpunkt I und zweiten Gelenkpunkt II, in denen die erste Schwinge 32 und die zweite Schwinge 34 jeweils mit dem Abdeckabschnitt 22 verbunden sind, bzw. eines Abstandes zwischen dem jeweiligen dritten Gelenkpunkt III und dem vierten Gelenkpunkt IV, in denen die erste Schwinge 32 und die zweite Schwinge 34 jeweils mit dem Befestigungsabschnitt 24 verbunden sind. Der die erste Schwinge 32 bildende Abschnitt des Befestigungsabschnitts 24 kann insbesondere eine unterschiedliche Kontur bzw. Form oder einen unterschiedlichen Verlauf aufweisen, wie der die zweite Schwinge 34 bildende Abschnitt des Befestigungsabschnitts 24. Hierdurch kann das Viergelenk-Koppelgetriebe 30 abermals in seinen elastischen Eigenschaften beeinflussbar sein.

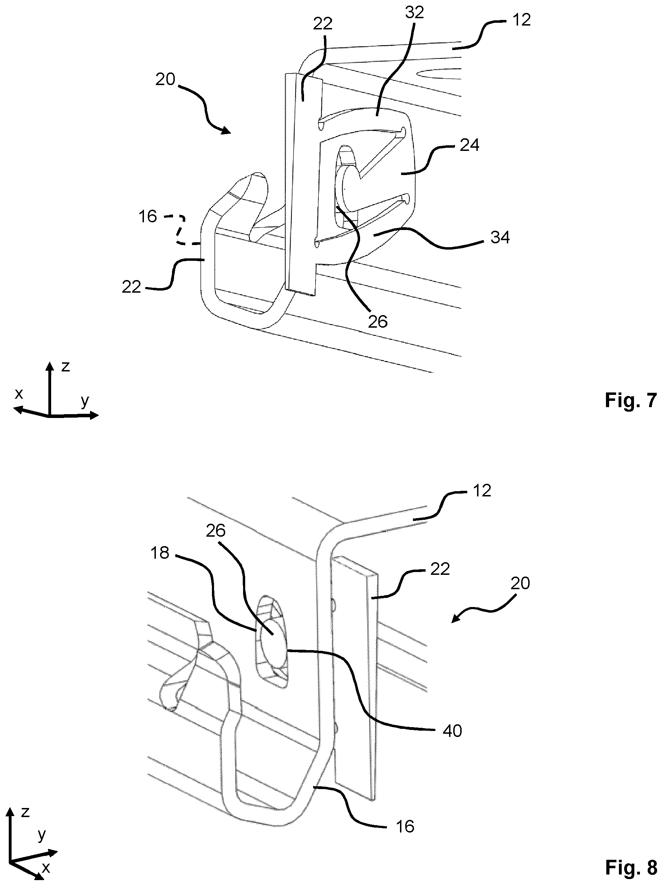

Die Figuren 7 und 8 zeigen eine Endkappe 20 gemäß eines zweiten Ausführungsbeispiels am Ende 16 der ersten Schiene 12 aus unterschiedlichen Blickwinkeln. Der Abdeckabschnitt 22 der Endkappe 20 gemäß des zweiten Ausführungsbeispiels ist vorliegend lediglich abstrakt skizziert dargestellt. Bevorzugt weist die Endkappe 20 gemäß des zweiten Ausführungsbeispiels die gleiche an die jeweilige Profilform der ersten Schiene 12 oder zweiten Schiene 14 angepasste Form des Abdeckbereichs 22 auf, wie sie anhand der Endkappe 20 gemäß des ersten Ausführungsbeispiels gezeigt ist.

Ein Ausgleich von Toleranzen eines Abstands zwischen einem Randbereich der Öffnung 18 und dem Ende 16 der ersten Schiene 12 kann durch eine gebogene Kontur des Randbereichs der Öffnung 18 verbessert bzw. weiter beeinflusst sein.

Fig. 8 zeigt eine Kontaktfläche 40 zwischen der Endkappe 20, insbesondere dem Vorsprung 26 der Endkappe 20, und dem Randbereich der Öffnung 18. Dieser Randbereich kann eine gekrümmte Kontur aufweisen. Der Vorsprung 26 kann in Richtung des Abdeckabschnitts 22 der Endkappe 20 eine gekrümmte Kontur aufweisen. Der Toleranzausgleich erfolgt mittels einer Federkraft des Vorsprungs 26 bzw. einer materialbedingten federnden Eigenschafft des gesamten Befestigungsabschnitts 24 der Endkappe 20.

Während einer Montage der Endkappen 20 müssen die Vorsprünge 26 zuerst aktiv aus einer Ausgangsebene parallel zur Querrichtung y nach innen vorgespannt werden, so dass die der Befestigungsabschnitt 24 an den jeweiligen Abschnitten des Profils der ersten Schiene 12 oder der zweiten Schiene 14 vorbeigeführt werden kann. Nach einem Aufstecken der Endkappe 20 auf das stirnseitige Ende 16 müssen die Vorsprünge 26 parallel zur Vertikalrichtung z nach unten oder oben bewegt werden, wodurch sie aufgrund der Elastizitätseigenschaften des in dem Befestigungsabschnitt 24 definierten Viergelenk-Koppelgetriebes 30 federelastisch gespannt werden.

Zunächst sorgt die Vorspannung des Befestigungsabschnitts 24 parallel zur Querrichtung y dafür, dass der Vorsprung 26 sicher in die jeweils kooperierende Öffnung 18 der ersten Schiene 12 oder zweiten Schiene 14 einfällt und in der Öffnung 18 gesichert ist. Die weitere Vorspannung des Vorsprungs 26 parallel zur Vertikalrichtung z nach unten oder oben treibt den Vorsprung 26 in der Öffnung 18 entlang seiner Koppelkurve ebenfalls wieder in Richtung seiner Ursprungslage, wobei sich der Vorsprung 26 an dem Randbereich der Öffnung 18 abstützt und hierdurch ein Spiel zwischen dem Abdeckabschnitt 22 und der Stirnseite der ersten Schiene 12 oder der zweiten Schiene 14 reduziert. Anders ausgedrückt wird eine Spielfreistellung der Endkappe 20 durch eine Wechselwirkung im Wesentlichen der Öffnung 18, insbesondere des Randbereichs der Öffnung 18, zusammen mit der Vorspannung des Vorsprungs 26, insbesondere einer federnden Kraft des Vorsprungs 26, und der jeweiligen Koppelkurve erreicht.

Zur einfacheren Montage der Endkappe 20 kann ein Hilfswerkzeug, insbesondere in Form eines Keils, welches an einer oberen Oberfläche des Innenprofils abstützbar ist, um den Vorsprung 26 der Endkappe 20 während des Aufsteckens vorzuspannen.

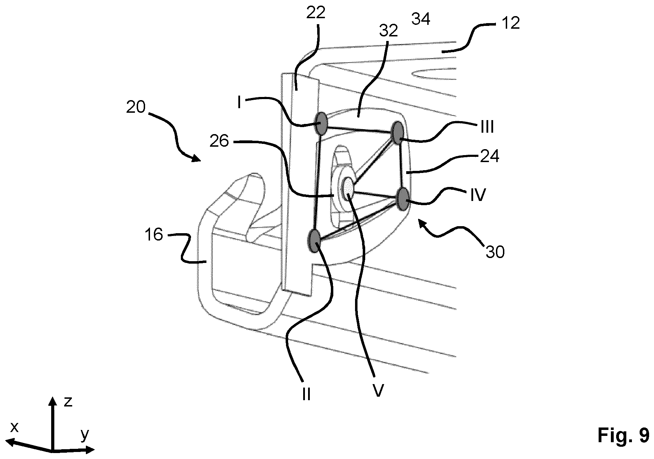

Fig. 9 veranschaulicht eine schematische Wirkweise eines Viergelenk-Koppelgetriebes 30 im Falle der Endkappe 20 von Fig. 7 gemäß des zweiten Ausführungsbeispiels.

Der Befestigungspunkt V ist Teil des Befestigungsabschnitts 24. Im Bereich des Befestigungspunkts V steht ein Vorsprung 26 seitlich, insbesondere parallel zur Querrichtung y, ab, welcher mit einem Randbereich der Öffnung 18 der ersten Schiene 12 in Kontakt bringbar ist.

Der Befestigungspunkt V folgt einer Koppelkurve, welche für derartige Viergelenk-Koppelgetriebe üblich ist. Diese Koppelkurve kann den Anforderungen entsprechend durch eine jeweils angepasste Länge der ersten Schwinge 32 und der zweiten Schwinge 34 sowie eines Abstandes zwischen dem jeweiligen ersten Gelenkpunkt I und zweiten Gelenkpunkt II, in denen die erste Schwinge 32 und zweite Schwinge 34 jeweils mit dem Abdeckabschnitt 22 verbunden sind.

Die Aufgabe der Befestigungsabschnitte 24 besteht darin, die Endkappe 20, insbesondere den Abdeckabschnitt 22 der Endkappe 20, in Richtung des jeweiligen stirnseitigen Endes 16 der ersten Schiene 12 oder zweiten Schiene 14 vorzuspannen.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 4: Lehne
- 6: Längseinsteller
- 8: Betätigungshebel
- 10: Schienenpaar
- 12: erste Schiene
- 14: zweite Schiene
- 16: Ende
- 18: Öffnung
- 20: Endkappe
- 22: Abdeckabschnitt
- 24: Befestigungsabschnitt
- 26: Vorsprung
- 30: Viergelenk-Koppelgetriebe
- 32: erste Schwinge
- 34: zweite Schwinge
- 40: Kontaktfläche

- I: erster Gelenkpunkt
- II: zweiter Gelenkpunkt
- III: dritter Gelenkpunkt
- IV: vierter Gelenkpunkt
- V: Befestigungspunkt
- X: Längsrichtung
- y: Querrichtung
- z: Vertikalrichtung

## Patentansprüche

1. Endkappe (20) für eine Schiene (12, 14), insbesondere eines Längseinstellers (6), wobei die Endkappe (20) einen Abdeckabschnitt (22), zum Abdecken eines stirnseitigen Endes (16) der Schiene (12, 14), und einen Befestigungsabschnitt (24), zur Befestigung der Endkappe (20) an der Schiene (12, 14), aufweist, **dadurch gekennzeichnet, dass**
der Befestigungsabschnitt (24) unter Bildung eines Viergelenk-Koppelgetriebes (30) mit dem Abdeckabschnitt (22) verbunden ist, wobei das Viergelenk-Koppelgetriebe (30) mittels eines Gestells, einer ersten Schwinge (32), einer zweiten Schwinge (34) und dem mit beiden Schwingen (32, 34) gekoppelten Befestigungsabschnitt (24) definiert ist.

2. Endkappe (20) gemäß Anspruch 1, wobei ein oberer Anbindungspunkt der ersten Schwinge (32) an dem Gestell einen ersten Gelenkpunkt (I) definiert.

3. Endkappe (20) gemäß einem der Ansprüche 1 oder 2, wobei ein unterer Anbindungspunkt der zweiten Schwinge (34) an dem Gestell einen zweiten Gelenkpunkt (II) definiert.

4. Endkappe (20) gemäß einem der Ansprüche 1 bis 3, wobei ein oberer Anbindungspunkt des Befestigungsabschnitts (24) an der ersten Schwinge (32) einen dritten Gelenkpunkt (III) definiert.

5. Endkappe (20) gemäß einem der Ansprüche 1 bis 4, wobei ein unterer Anbindungspunkt des Befestigungsabschnitts (24) an der zweiten Schwinge (34) einen vierten Gelenkpunkt (IV) definiert.

6. Endkappe (20) gemäß einem der Ansprüche 1 bis 5, wobei ein oberer Anbindungspunkt des Befestigungsabschnitts (24) mittels einer ersten Schwinge (32) mit dem Abdeckabschnitt (22) verbunden ist.

7. Endkappe (20) gemäß einem der Ansprüche 1 bis 6, wobei ein unterer Anbindungspunkt des Befestigungsabschnitts (24) mittels einer zweiten Schwinge (34) mit dem Abdeckabschnitt (22) verbunden ist.

8. Endkappe (20) gemäß einem der Ansprüche 1 bis 7, wobei das Gestell durch den Abdeckabschnitt (22) definiert ist.

9. Endkappe (20) gemäß einem der Ansprüche 1 bis 8, wobei die Endkappe (20) wenigstens abschnittsweise elastisch verformbar ist.

10. Endkappe (20) gemäß einem der Ansprüche 1 bis 9, wobei ein Befestigungspunkt (V) Teil des Befestigungsabschnitts (24) der Endkappe (20) ist.

11. Endkappe (20) gemäß Anspruch 10, wobei im Bereich des Befestigungspunkts (V) ein Vorsprung (26) seitlich, insbesondere parallel zu einer Querrichtung (y), absteht, welcher mit einem Randbereich einer Öffnung (18) der ersten Schiene (12) in Kontakt bringbar ist.

12. Endkappe (20) gemäß Anspruch 11, wobei der Vorsprung (26) in Richtung des Abdeckabschnitts (22) der Endkappe (20) eine gekrümmte Kontur aufweist.

13. Längseinsteller (6), insbesondere für einen Fahrzeugsitz (1), aufweisend mindestens ein Schienenpaar (10), welches aus einer ersten Schiene (12) und einer relativ zur ersten Schiene (12) in Längsrichtung (x) verschiebbar geführten zweiten Schiene (14) gebildet ist, wobei wenigstens die erste Schiene (12) oder die zweite Schiene (14) wenigstens eine Öffnung (18) zur Befestigung einer Endkappe (20) für ein Ende (16) der jeweiligen Schiene (12, 14) aufweist, **dadurch gekennzeichnet, dass**
der Längseinsteller (6) eine in der Öffnung (18) befestigte Endkappe (20) gemäß einem der Ansprüche 1 bis 12 aufweist.

14. Längseinsteller (6) gemäß Anspruch 13, wobei der Randbereich der Öffnung (18) eine gebogene Kontur aufweist.

## Claims

1. End cap (20) for a rail (12, 14), in particular of a longitudinal adjuster (6), wherein the end cap (20) has a covering portion (22), for covering an end-face end (16) of the rail (12, 14), and a fastening portion (24), for fastening the end cap (20) to the rail (12, 14),
**characterized in that**
the fastening portion (24) is connected to the covering portion (22) with the formation of a four-joint coupling mechanism (30), wherein the four-joint coupling mechanism (30) is defined by a frame, a first link (32), a second link (34) and the fastening portion (24) which is coupled to the two links (32, 34) .

2. End cap (20) according to Claim 1, wherein an upper connecting point of the first link (32) to the frame defines a first point of articulation (I).

3. End cap (20) according to either of Claims 1 and 2, wherein a lower connecting point of the second link (34) to the frame defines a second point of articulation (II).

4. End cap (20) according to one of Claims 1 to 3, wherein an upper connecting point of the fastening portion (24) to the first link (32) defines a third point of articulation (III).

5. End cap (20) according to one of Claims 1 to 4, wherein a lower connecting point of the fastening portion (24) to the second link (34) defines a fourth point of articulation (IV).

6. End cap (20) according to one of Claims 1 to 5, wherein an upper connecting point of the fastening portion (24) is connected to the covering portion (22) by a first link (32).

7. End cap (20) according to one of Claims 1 to 6, wherein a lower connecting point of the fastening portion (24) is connected to the covering portion (22) by a second link (34).

8. End cap (20) according to one of Claims 1 to 7, wherein the frame is defined by the covering portion (22) .

9. End cap (20) according to one of Claims 1 to 8, wherein the end cap (20) is elastically deformable at least in sections.

10. End cap (20) according to one of Claims 1 to 9, wherein a fastening point (V) is part of the fastening portion (24) of the end cap (20).

11. End cap (20) according to Claim 10, wherein, in the region of the fastening point (V), a protrusion (26) protrudes laterally, in particular parallel to a transverse direction (y), said protrusion being bringable into contact with an edge region of an opening (18) of the first rail (12).

12. End cap (20) according to Claim 11, wherein the protrusion (26) has a curved contour in the direction of the covering portion (22) of the end cap (20).

13. Longitudinal adjuster (6), in particular for a vehicle seat (1), having at least one pair of rails (10) which is formed from a first rail (12) and a second rail (14) guided displaceably in the longitudinal direction (x) relative to the first rail (12), wherein at least the first rail (12) or the second rail (14) has at least one opening (18) for the fastening of an end cap (20) for an end (16) of the respective rail (12, 14),
**characterized in that**
the longitudinal adjuster (6) has an end cap (20) fastened in the opening (18) according to one of Claims 1 to 12.

14. Longitudinal adjuster (6) according to Claim 13, wherein the edge region of the opening (18) has an arched contour.

## Revendications

1. Capuchon d'extrémité (20) pour un rail (12, 14), notamment d'un dispositif de réglage longitudinal (6), le capuchon d'extrémité (20) présentant une section de recouvrement (22) pour recouvrir une extrémité frontale (16) du rail (12, 14) et une section de fixation (24) pour fixer le capuchon d'extrémité (20) au rail (12, 14), **caractérisé en ce que**
la section de fixation (24) est reliée à la section de recouvrement (22) en formant un quadrilatère articulé (30), le quadrilatère articulé (30) étant défini par un châssis, une première bielle oscillante (32), une deuxième bielle oscillante (34) et la section de fixation (24) couplée aux deux bielles oscillantes (32, 34).

2. Capuchon d'extrémité (20) selon la revendication 1, dans lequel un point d'attache supérieur de la première bielle oscillante (32) au châssis définit un premier point d'articulation (I).

3. Capuchon d'extrémité (20) selon l'une quelconque des revendications 1 ou 2, dans lequel un point d'attache inférieur de la deuxième bielle oscillante (34) au châssis définit un deuxième point d'articulation (II) .

4. Capuchon d'extrémité (20) selon l'une quelconque des revendications 1 à 3, dans lequel un point d'attache supérieur de la section de fixation (24) à la première bielle oscillante (32) définit un troisième point d'articulation (III).

5. Capuchon d'extrémité (20) selon l'une quelconque des revendications 1 à 4, dans lequel un point d'attache inférieur de la section de fixation (24) à la deuxième bielle oscillante (34) définit un quatrième point d'articulation (IV).

6. Capuchon d'extrémité (20) selon l'une quelconque des revendications 1 à 5, dans lequel un point d'attache supérieur de la section de fixation (24) est relié à la section de recouvrement (22) au moyen d'une première bielle oscillante (32).

7. Capuchon d'extrémité (20) selon l'une quelconque des revendications 1 à 6, dans lequel un point d'attache inférieur de la section de fixation (24) est relié à la section de recouvrement (22) au moyen d'une deuxième bielle oscillante (34).

8. Capuchon d'extrémité (20) selon l'une quelconque des revendications 1 à 7, dans lequel le châssis est défini par la section de recouvrement (22).

9. Capuchon d'extrémité (20) selon l'une quelconque des revendications 1 à 8, dans lequel le capuchon d'extrémité (20) est élastiquement déformable au moins par sections.

10. Capuchon d'extrémité (20) selon l'une quelconque des revendications 1 à 9, dans lequel un point de fixation (V) fait partie de la section de fixation (24) du capuchon d'extrémité (20).

11. Capuchon d'extrémité (20) selon la revendication 10, dans lequel, dans la zone du point de fixation (V), une saillie (26) dépasse latéralement, notamment parallèlement à une direction transversale (y), qui peut être mise en contact avec une zone de bord d'une ouverture (18) du premier rail (12).

12. Capuchon d'extrémité (20) selon la revendication 11, dans lequel la saillie (26) présente un contour incurvé en direction de la section de recouvrement (22) du capuchon d'extrémité (20).

13. Dispositif de réglage longitudinal (6), notamment pour un siège de véhicule (1), présentant au moins une paire de rails (10), qui est formée d'un premier rail (12) et d'un deuxième rail (14) guidé de manière coulissante par rapport au premier rail (12) dans la direction longitudinale (x), au moins le premier rail (12) ou le deuxième rail (14) présentant au moins une ouverture (18) pour la fixation d'un capuchon d'extrémité (20) pour une extrémité (16) du rail respectif (12, 14), **caractérisé en ce que**
le dispositif de réglage longitudinal (6) présente un capuchon d'extrémité (20) selon l'une quelconque des revendications 1 à 12 fixé dans l'ouverture (18).

14. Dispositif de réglage longitudinal (6) selon la revendication 13, dans lequel la zone de bord de l'ouverture (18) présente un contour courbé.
